Europäisches Patentamt

(19) European Patent Office  (11) Publication number: **0 020 389**

Office européen des brevets  **B1**

(12) **EUROPEAN PATENT SPECIFICATION**

(45) Date of publication of patent specification: **13.07.83**   (51) Int. Cl.³: **F 16 D 65/12**

(21) Application number: **79901075.6**

(22) Date of filing: **20.08.79**

(86) International application number:
**PCT/US79/00564**

(87) International publication number:
**WO 80/00735 17.04.80 Gazette 80/8**

(54) **DISC BRAKE ASSEMBLY CONTAINING SPLIT DISCS.**

(30) Priority: **25.09.78 US 945749**

(43) Date of publication of application:
**07.01.81 Bulletin 81/1**

(45) Publication of the grant of the patent:
**13.07.83 Bulletin 83/28**

(84) Designated Contracting States:
**DE FR GB NL SE**

(56) References cited:
**US - A - 3 478 849**
**US - A - 3 494 452**
**US - A - 3 548 979**
**US - A - 3 800 392**
**US - A - 3 927 740**
**US - A - 4 072 219**

(73) Proprietor: **The B.F. GOODRICH Company**
**Dept. 0015 WHB-6 500 South Main Street**
**Akron, Ohio 44318 (US)**

(72) Inventor: **ENRIGHT, John Joseph**
**103 South Monroe Street**
**Troy, OH 45373 (US)**

(74) Representative: **Mayes, Stuart David et al,**
**BOULT, WADE & TENNANT 27 Furnival Street**
**London, EC4A 1PQ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Disc brake assembly containing split discs

Background of the invention

This invention relates to disc type brakes or clutches and particularly to the arrangement of the discs of the rotor and stator. With high performance brakes and especially disc brakes having axially integral one-piece discs objectionably shrill high frequency noise is caused by friction forces generated on the disc faces and vibrating the discs. The only damping is internal material hysteresis which is not sufficient to subdue the vibrations and noise. This is a serious problem because it occurs in brakes utilizing discs of carbon composite friction material which are highly effective and desirable except for the noise.

The noise produced can be reduced by damping through splitting of some of the discs into two or more disc members. With the split discs the friction forces on a single disc are no longer added but act to excite separate split disc members so that the response is added. Because the excitation is different instantaneously and locally on each disc the response is different and micro-scale relative motion exists between the disc members of the split disc. This relative motion is resisted at the join between the adjacent disc members and constitutes a damping force inhibiting the vibration of either disc member to add to the inherent internal damping of the disc material. Further, by selecting an interface so that both halves of the split disc have the same thickness there is little or no thermal effectiveness penalty.

A known brake disc consisting of two such disc members of equal thickness is described in US—A—4,072,219. In one embodiment in that specification the two disc members are separated by a layer of material. However, there is no appreciation of the problems associated with melting or welding together of the members when the brake heats up to a very high temperature, as arises with the aforementioned high performance brakes.

The invention on the other hand provides a multiple disc brake assembly having a rotor portion comprising at least two spaced rotatable discs and a stator portion comprising at least one nonrotatable disc disposed between said at least two spaced rotatable discs, characterised in that said discs are of carbon composite friction material, and in that said at least one nonrotatable disc consists of two disc members of equal thickness separated by a thin graphite foil sheet preventing said disc members from melting or welding together.

The combination of the stated structure and materials affords a very effective heat sink, thus overcoming the problem of welding together of the disc members which it is essential to avoid if the advantageous low vibration quality of the composite disc is to be maintained.

The accompanying drawings show a preferred form made in accordance with and embodying this invention and which is representative of how this invention may be practiced.

Brief description of the drawings

In the drawings:

Fig. 1 is a fragmentary diametrical cross-sectional view of a brake embodying the invention (shown in solid lines) mounted for operation on a typical aircraft wheel installation with the wheel being represented by a chain-dotted lines.

Fig. 2 is a fragmentary view in perspective of one of the split discs showing one of the connecting clips in expanded relationship.

Detailed description

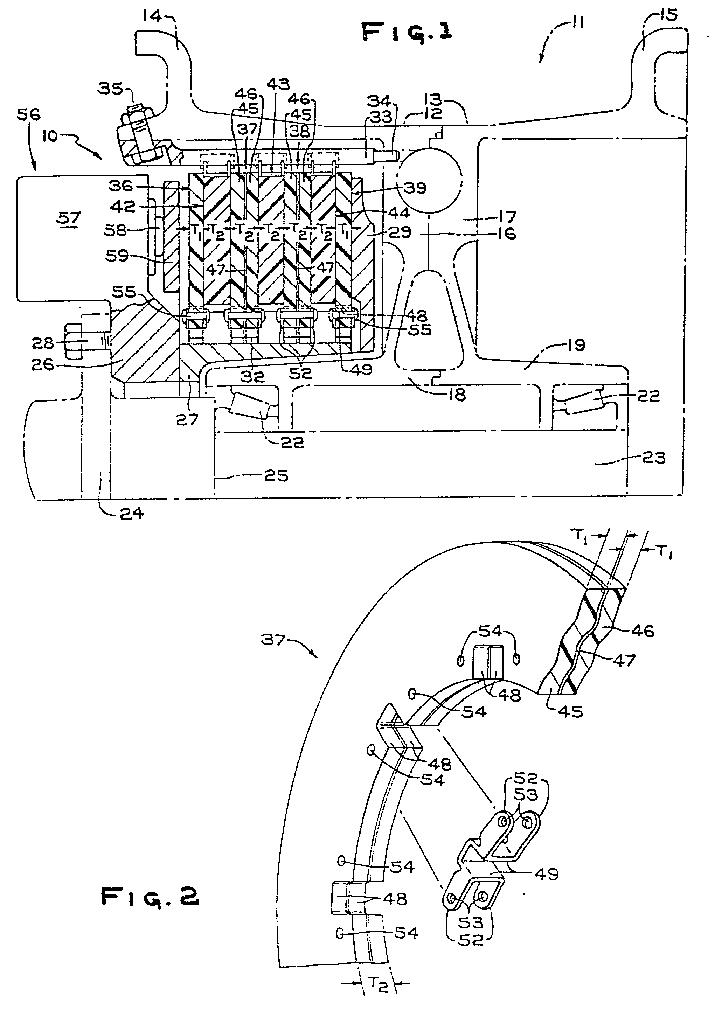

Referring to Fig. 1 a friction mechanism such as the brake 10 is shown mounted on a generally cylindrical wheel 11 having matching wheel sections 12 and 13. Each of the wheel sections 12 and 13 has rim members 14 and 15, web members 16 and 17, and hub members 18 and 19 respectively. The wheel sections 12 and 13 may be fastened together by bolts (not shown) disposed in aligned holes of the web members 16 and 17.

The hub members 18 and 19 are supported for rotation on bearings 22 mounted on a nonrotatable axle member 23. Outboard of the wheel 11 or away from the web member 16, a torque flange 24 is mounted on a boss 25 of the axle member 23. The torque flange 24 supports a torque frame 26 seated on the boss 25 and extending radially outward from the axle member 23. Inboard of the torque flange 24 and also seated on the boss 25 of the axle member 23 is a torque tube 27 extending inboard towards the web member 16 and within the space between the rim member 14 and hub member 18. The torque flange 24, torque frame 26 and torque tube 27 may be fastened together by suitable means such as bolts 28 at circumferentially spaced-apart positions around the flange.

At the inboard end of the torque tube 27 an annular radially extending reaction plate member 29 may be fastened to the torque tube by suitable means such as bolts (not shown). On the radially outward surface of the torque tube 27 axially extending spline members 32 are disposed at circumferentially spaced-apart positions around the torque tube.

Key members 33 are positioned adjacent the rim member 14 and have lugs 34 at their inboard ends which are disposed in slots in wheel web member 16. The outboard ends are fastened by bolts 35 to the wheel rim member 14. The key members 33 extend generally in an axial direction and are positioned at circumferentially spaced-apart positions around the wheel 11.

Spline members 32 support nonrotatable discs 36, 37, 38 and 39 which have slotted openings at circumferentially spaced-apart positions around the inner periphery and constitute the stator of the brake 10. Rotatable discs 42, 43 and 44 have openings at the outer periphery for engaging the key members 33 and form the rotor of the brake 10. All of the nonrotatable discs 36 through 39 and rotatable discs 42 through 44 are of a suitable brake material for withstanding high temperatures and providing a heat sink and in this embodiment the discs are of a carbon composite friction material. As shown in Fig. 1 the rotatable disc 42 is positioned between nonrotatable discs 36 and 37, the rotatable disc 43 is positioned between nonrotatable discs 37 and 38, and rotatable disc 44 is positioned between nonrotatable discs 38 and 39. The end nonrotatable discs 36 and 39 have a thickness T1 which is one-half the thickness T2 of the other stationary discs 37 and 38 and the rotatable discs 42, 43 and 44.

Referring to Fig. 2 nonrotatable disc 37 is shown and the following description will also apply to nonrotatable disc 38 which is identical to nonrotatable disc 37. Nonrotatable disc 37 is split into two disc members 45 and 46. Although a nonrotatable disc 37 may be split into more than two disc members it is preferable to have only two disc members with the same thickness T1 which is half the thickness T2 of the disc 37. Interposed between the disc members 45 and 46 is a separating sheet member 47 of graphite foil or other similar material to prevent melting or welding together of the two disc members under the high temperatures and pressures of operation. The disc members 45 and 46 have aligned slotted openings 48 at circumferentially spaced-apart positions around the inner periphery of the disc members. The rotatable discs 42, 43 and 44 have similar openings at circumferentially spaced-apart positions around the outer periphery of the discs.

It is preferred that a suitable connecting means such as wear-resistant bearing members 49 are disposed in the openings 48 for transmitting or resisting transmission of rotational torque. The bearing members 49 have lugs 52 extending circumferentially along the outer surfaces of the discs 37 and 38. The lugs 52 may have holes 53 which in the installed position of the bearing members 49 are in alignment with holes 54 in the disc members 45 and 46. Rivets 55 may be positioned in the holes 53 and 54 to hold the bearing members 49 in place and also connect the disc members 45 and 46. Similar bearing members, lugs and rivets may be used in the openings of the rotatable discs 42, 43 and 44 as well as in openings in nonrotatable end discs 36 and 39 for sliding engagement on the key members 33 and on the spline members 32. As stated, use of a connecting means such as bearing members 49 is preferred but is, however, not absolutely necessary. In certain situations where bearing members such as 49 are not necessary, they may not be used and thus, there would be no connecting means between the disc members of each disc.

The brake actuating mechanism consists of hydraulic piston and cylinder assemblies 56 disposed at spaced-apart positions around the brake 10. Each of these piston and cylinder assemblies 56 is mounted in a cylindrical housing 57 of the torque frame 26. A piston rod 58 of each of the piston and cylinder assemblies 56 engages a retractor plate 59 disposed between the non-rotatable disc 36 and the torque frame 26. A suitable retractor mechanism of a type well known to those skilled in the art may also be mounted at spaced-apart positions around the torque frame 26 and have rods fastened to the retractor plate 59 with automatic adjusting or wear compensating mechanism.

In operation, hydraulic fluid from a source of fluid pressure not shown is communicated to the piston and cylinder assemblies 56 causing the piston rod 58 to displace the retractor plate 59 towards the right as shown in Fig. 1 and thereby slide the outboard nonrotatable disc 36 along the spline members 32 and into engagement with the rotatable disc 42. In the same manner the rotatable disc 42 slides along the key members 33 into engagement with nonrotatable disc 37 until eventually all of the discs are in engagement and under pressure one against the other and against the reaction plate member 29.

During the period of engagement the friction forces on the split nonrotatable discs 37 and 38 cause vibration of the disc members 45 and 46 however because the excitation is different instantaneously and locally on each disc member the response is different and microscale relative motion exists at the inner face between the disc members. This relative motion is resisted by the contact friction between the rotatable disc 42, 43 and 44 and the nonrotatable discs 36, 37, 38 and 39 and constitutes a damping force inhibiting the vibration of either disc members 45 or 46.

Damping and reduction in noise can be further increased by splitting the nonrotatable discs 37 and 38 into more than two disc members however this will decrease the effectiveness of the discs 37 and 38 as heat sinks. By providing the interface between the disc members 45 and 46 at the midpoint of the discs 37 and 38 little or no thermal effectiveness penalty is realized.

By alternating relatively thin discs with the relatively thick discs there is a reduction in noise obtained because the natural frequencies of adjacent parts are staggered and this reduces the resonance of the brake. A similar effect can be obtained by changing the material of the adjacent parts. Both of these expedients however decrease the effectiveness of the assembly as a heat sink.

The optimum heat sink requires balancing and maximizing the thermal diffusivity and heat capacitance of the rotors and stators. This is most effectively done when all discs of the rotors and stators are of the same material and nearly the same thickness. By splitting the discs 37 and 38 of the stator this staggers the natural frequency of the adjacent discs with little or no thermal penalty. Also all of the discs of the stator or rotor may be split to lower the natural frequencies but this will not reduce the resonance of the brake assembly 10. With the construction shown in the drawings and described hereinabove noise reduction is obtained without sacrificing thermal effectiveness of the brake 10.

## Claims

1. A multiple disc brake assembly (10) having a rotor portion comprising at least two spaced rotatable discs (42, 43, 44) and a stator portion comprising at least one nonrotatable disc (37, 38) disposed between said at least two spaced rotatable discs, characterised in that said discs are of carbon composite friction material, and in that said at least one nonrotatable disc consists of two disc members (45, 46) of equal thickness separated by a thin graphite foil sheet (47) preventing said disc members from melting or welding together.

2. An assembly as claimed in claim 1 characterised in that said nonrotatable disc (37, 38) includes an inner periphery having means (48, 49, 52, 53, 54, 55) located along circumferentially spaced positions at said periphery for connecting said disc members together.

## Patentansprüche

1. Mehrfach-Scheibenbremsen-Baugruppe (10) mit einem Rotor-Teil, der wenigstens zwei mit Zwischenräumen angeordnete drehbare Scheiben (42, 43, 44) umfaßt, und einem Stator-Teil, der wenigstens eine nicht-drehbare Scheibe (37, 38) umfaßt, die zwischen den wenigstens zwei mit Zwischenräumen angeordneten Scheiben angebracht ist, dadurch gekennzeichnet, daß diese Scheiben aus einem Kohlenstoff-Verbundreibstoff bestehen und die wenigstens eine nicht-drehbare Scheibe aus zwei Scheiben-Elementen (45, 46) gleicher Dicke besteht, die durch ein Blatt einer dünnen Graphit-Folie (47) voneinander getrennt sind, das ein Verschmelzen oder Verschweißen der Scheiben-Elemente verhindert.

2. Baugruppe nach Anspruch 1, dadurch gekennzeichnet, daß die nicht-drehbare Scheibe (37, 38) einen inneren Umfang mit Vorrichtungselementen (48, 49, 52, 53, 54, 55) aufweist, die in Abständen längs dieses Umfangs angeordnet sind und dazu dienen, die Scheiben-Elemente miteinander zu verbinden.

## Revendications

1. Frein à disques multiples (10) comportant une partie rotor comprenant au moins deux disques tournants espacés (42, 43, 44) et une partie stator comprenant au moins un disque non-tournant (37, 38) disposé entre au moins lesdits deux disques tournants espacés, caractérisé en ce que lesdits disques sont en un matériau de friction composite au carbone, et en ce que au moins le disque non-tournant est constitué de deux éléments de disque (45, 46) d'égale épaisseur séparés par un mince feuille de graphite (47) empêchant lesdits éléments de disque de se fondre ou de se souder.

2. Frein à disques selon la revendication 1, caractérisé en ce que ledit disque non-tournant (37, 38) comprend une périphérie intérieure comportant des moyens (48, 49, 52, 53, 54, 55) placés en des positions espacées tout le long de ladite périphérie pour connecter lesdits éléments de disque entre eux.

FIG.1

FIG.2